# EUROPÄISCHE PATENTANMELDUNG

(11) **EP 0 905 934 A2**
(43) Veröffentlichungstag der Anmeldung: **31.03.1999**
(21) Anmeldenummer: 98116968.3
(22) Anmeldetag: 08.09.1998
(51) Int. Cl.: H04J 3/08, H04L 12/42, H04Q 3/00

(54) **Verfahren und Anordnung zum Betreiben von an ein Ringnetz angeschlossenen Netzeinrichtungen in einem Zubringernetz eines Kommunikationsnetzes**

(30) Priorität: 26.09.1997 DE 19742583
(71) Anmelder: SIEMENS AKTIENGESELLSCHAFT, 80333 München (DE)
(72) Erfinder: Pukowski, Joachim, 17509 Hanshagen (DE); Reichenbach, Stefan, 17491 Greifswald (DE); Richter, Steffan, 17493 Greifswald (DE); Zuck, Josef-Peter, 81825 München (DE)

(57) **Zusammenfassung**

In einem SDH-Ringnetz (SDH-RN) wird ein zentraler,virtueller Betriebstechnik-Übertragungskanal (BK) eingerichtet, über den betriebstechnische, administrative und sicherheitstechnische Informationen (ci) von einer zentralen Zubringernetz-Einrichtung (OLT) bzw. von peripheren Zubringernetz-Einrichtungen (ODT1..n) gezielt an die jeweiligen peripheren Zubringernetz-Einrichtungen (ODT1..n) bzw. an die zentrale Zubringernetz-Einrichtung (OLT) übermittelt werden. Hierdurch wird die Informationsübermittlung mit geringsten zusätzlichen Aufwand in den an das SDH-Ringnetz (SDH-RN) angeschlossenen Einrichtungen realisiert.

## Beschreibung

Die Zubringernetze von öffentlichen oder privaten Kommunikationsnetzen sind in zunehmenden Maße für unterschiedlichste Dienste bzw. für anschließbare Kommunikationsendgeräte mit unterschiedlichen Kommunikationsschnittstellen zu konzipieren. Hierbei sind die Kommunikationsendgeräte über Netzanschlußeinrichtungen und über ein Zubringernetz mit einem für den jeweiligen Dienste vorgesehenen Kommunikationssystem bzw. Vermittlungseinrichtung verbunden. Das Zubringernetz ist entsprechend der Anzahl der anzuschließenden Kommunikationsendgeräte ausgestaltet, d.h. weist geeignete periphere bzw. verkehrsbündelnde Zubringernetz-Einrichtungen und zumindest eine zentrale Zubringernetz-Einrichtung auf. Die zentrale Zubringernetz-Einrichtung stellt das Bindeglied zwischen den peripheren Zubringernetz-Einrichtungen und den Kommunikionssystemen dar, wobei zwischen einer zentralen Zubringernetz-Einrichtung und einem Kommunikationssystem überwiegend die standardisierte V.5-Schnittstelle vorgesehen ist.

An die peripheren Zubringernetz-Einrichtungen sind weitere periphere Zubringernetz-Eintrichtungen anschließbar, die mit für den Anschluß von Kommunikationsendgeräten vorgesehenen Netzanschlußeinrichtungen verbunden sind Die Übertragungsmedien zwischen der zentralen und den peripheren Zubringernetz-Einrichtungen sind vorzugsweise durch optische Lichtwellenleiter realisiert. In der Fachwelt sind derart konzipierte Zubringernetze als AON (Aktives optisches Netz)-Zubringernetze bekannt, wobei die einzelnen peripheren und zentralen Einrichtungen baumstruktur-gemäß über optische Punkt zu Punkt-Verbindungen untereinander verbunden sind. In zukünfigen Zubringernetzen ist vorgesehen, SDH (Synchrone digitale Hierarchie)-Kommunikationsnetze in die Zubringernetze zu integrieren, d.h. mitzubenutzen. Die SDH-Zubringernetze sind vorwiegend als SDH-Ringnetze ausgestaltet und stellen für die Übermittlung von digitalen Informationen übertragungstechnische Ressourcen von 155 Mbit/s und vielfache davon bereit. Gemäß den ETSI-Standards G.707 bis 709 stellt die kleinste übertragungstechnische Ressource innerhalb eines SDH-Ringnetzes ein Übertragungscontainer mit einer Übertragungsgeschwindigkeit von 2048 kbit/s dar. Diese werden in Gruppen von 3 Übertragungscontainern zusammengefaßt, wobei weitere übergeordnete Gruppen gebildet werden. Über die Übertragungscontainer des SDH-Ringnetzes können sowohl multiplexstrukturierte als auch nach dem Asynschron Transfer Modus strukturierte Nutz- und Signalisierungsinformationen übertragen werden.

Bei Zubringernetzen mit Baumstruktur werden betriebstechnische, administrative und sicherheitstechnische Informationen zusammen mit den Nutz- und Signalisierungsinformationen bidirektional an die jeweiligen zentralen oder peripheren Zubringernetz-Einrichtungen übermittelt, wobei für jede der peripheren Zubringernetz-Einrichtungen ein spezieller Übertragungskanal vorgesehen ist. Mit Hilfe der betriebstechnischen, administrativen und sicherheitstechnischen Informationen werden die einzelnen peripheren Einrichtungen in Betrieb genommen, überwacht, ggf. administriert, konfiguriert und nach Störungs- oder Fehlermeldungen entsprechende Fehlerlokalisierungs- und Konfigurationsmaßnahmen eingeleitet.

Die der Erfindung zugrundeliegende Aufgabe besteht darin, den peripheren Zubringernetz-Einrichtungen durch zentrale Zubringernetz-Einrichtung über Ringnetze, insbesondere SDH-Ringnetz ohne Änderungen vorhandener SDH-Ringnetze zu betreiben. Die Aufgabe wird durch die Merkmale des Patentanspruchs 1 gelöst.

Der wesentliche Aspekt des erfindungsgemäßen Verfahrens ist darin zu sehen, daß im Ringnetz ein zentraler, virtueller Betriebstechnik-Übertragungskanal bzw. Betriebskanal eingerichtet wird und über diesen betriebstechnische, administrative und sicherheitstechnische Informationen von der zentralen Einrichtung bwz. von den peripheren Zubringernetz-Einrichtungen gezielt an die jeweiligen peripheren Zubringernetz-Einrichtungen bzw. an die zentrale Zubringernetz-Einrichtung übermittelt werden. Durch das Einrichten eines zentralen, virtuellen Betriebstechnik-Übertragungskanals für die Übermittlung von betriebstechnischen, administrativen und sicherheitstechnischen Informationen können die pheripheren Zubringernetz-Einrichtungen von der zentralen Zubringernetz-Einrichtung betrieben, gewartet, ggf. umkonfiguriert und administriert werden, ohne die vorhandene Struktur von Ringnetzen für die Übermittlung von Nutz- und Signalisierungsinformationen zu ändern. Das erfindungsgemäße Verfahren wird besonders vorteilhaft bei mehreren an das Ringnetz angeschlossenen peripheren Zubringernetz-Einrichtungen und einer zentralen Zubringernetz-Einrichtung eingesetzt. Vorteilhaft können des weiteren die vorhandenen standardisierten und in den Einrichtungen unterschiedlichster Hersteller implementierten Schnittstellen für die jeweiligen Übertragungskanäle benutzt werden.

Sind für den Anschluß von Kommunikationsendgeraten vorgesehene, weitere periphere Zubringernetz-Einrichtungen an die peripheren Zubringernetz-Einrichtungen angeschlossen, so werden die betriebstechnischen, administrativen und sicherheitstechnischen Informationen von den jeweils weiteren Zubringernetz-Einrichtungen über den zentralen, virtuellen Betriebstechnik-Übertragungskanal des Ringnetzes von der bzw. an die zentrale Zubringernetz-Einrichtung übermittelt - Anspruch 2. Hierbei sind die für die lokale periphere Zubringernetz-Einrichtung und für die weiteren Zubringernetz-Einrichtungen vorgesehenen betriebstechnischen, administrativen und sicherheitstechnischen Informationen zu separieren und an die jeweiligen Einrichtungen zu übermitteln.

Gemäß einer vorteilhaften Weiterbildung des erfindungsgemäßen Verfahrens ist das Ringnetz als SDH-Ringnetz und in diesem ein virtueller Betriebstechnik-Übertragungskanal durch jeweils zumindest einen virtuellen Betriebstechnik-Übertragungscontainer zwischen den angeschlossenen peripheren Zubringernetz-Einrichtungen und der zentralen Zubringernetz-Einrichtung realisiert, wobei in den peripheren Zubringernetz-Einrichtungen und der zentralen Zubringernetz-Einrichtung jeweils der zumindest eine ankommende und abgehende Betriebstechnik-Übertragungscontainer abgeschlossen ist. Die ankommenden betriebstechnischen, administrativen und sicherheitstechnischen Informationen werden aus dem abgeschlossenen Betriebstechnik-Übertragungscontainer entnommen und die entnommenen betriebstechnischen, administrativen und sicherheitstechnischen Informationen, die an die jeweilige periphere Zubringernetz-Einrichtung bzw. zentrale Zubringernetz-Einrichtung adressiert ist, werden an diese weitergeleitet. Desweiteren werden die entnommenen sowie in der jeweiligen peripheren Zubringernetz-Einrichtung bzw. der zentralen Zubringernetz-Einrichtung gebildeten sowie von einer weiteren peripheren Zubringernetz-Einrichtung übermittelten betriebstechnischen, administrativen und sicherheitstechnischen Informationen, die an eine andere periphere Zubringernetz-Einrichtung bzw. an die zentrale Zubringernetz-Einrichtung adressiert sind, in den abgehenden Betriebstechnik-Übertragungscontainer eingefügt - Anspruch 4. Bei dieser Realisierungsvariante werden die betriebstechnischen, administrativen und sicherheitstechnischen Informationen transparent über den im SDH-Ringnetz eingerichteten Betriebstechnik-Übertragungskanal von Komponente zu Komponente übermittelt, wobei der Betriebstechnik-Übertragungskanal zwischen den Komponenten des SDH-Ringnetzes durch jeweils zumindest einen eingerichteten Betriebstechnik-Übertragungscontainer - überlicherweise mit einer Übertragungsgeschwindigkeit von 2048 kbit/s - realisiert ist. Hierdurch kann das vorhandene SDH-Ringnetz unverändert mitbenutzt und die Übermittlung der betriebstechnischen, administrativen und sicherheitstechnischen Informationen mit geringsten zusätzlichen Aufwand in den peripheren Einrichtungen und der zentralen Einrichtung realisiert werden.

Vorteilhaft ist der zumindest eine virtuelle Betriebstechnik-Übertragungscontainer in den an das SDH-Ringnetz (RN) angeschlossenen Komponenten gemäß dem ETSI-Standard G.703 abgeschlossen - Anspruch 5. Hierdurch ist der Abschluß des virtuellen Betriebstechnik-Übertragungscontainers durch handelsübliche Schaltkreistechnik realsierbar, wobei der Aufwand für die Übermittlung der betriebstechnischen, administrativen und sicherheitstechnischen Informationen weiter reduziert wird.

Gemäß einer weiteren Ausgestaltung der Erfindung werden den betriebstechnischen, administrativen oder sicherheitstechnischen Informationen im Sinne einer gezielten Übermittlung an eine periphere oder zentrale Zubringernetz-Einrichtung jeweils Adreßinformationen hinzugefügt und über den Betriebstechnik-Übertragungskanal übermittelt. In den betriebstechnischen, administrativen oder sicherheitstechnischen Informationen empfangende Zubringernetz-Einrichtungen werden in Abhängigkeit von der mitübermittelten Adreßinformation die übermittelten betriebstechnischen, administrativen oder sicherheitstechnischen Informationen an interne oder an diese angeschlossene Komponenten oder an die im Ringnetz (RN) folgende Zubringernetz-Einrichtung weitergeleitet - Anspruch 6. Durch diese In-Band-Adressierung bzw. Signalisierung kann in Ringnetzen, insbesondere in einem SDH-Ringnetz, ohne zusätzliche Anpassungen ein Betriebstechnik-Übertragungskanal eingerichtet und betrieben werden. Für die Adressierung bzw. Adreßinformationen können beliebige Adressierungsverfahren eingesetzt werden, wobei der Adreßinformationsumfang an der Anzahl der zu adressierenden Zubringernetz-Einrichtung bzw. deren interne Komponenten orientiert ist.

Gemäß einer weiteren vorteilhaften Ausgestaltung des erfindungsgemäßen Verfahrens ist die Übertragungsgeschwindigkeit der zu übermittelnden betriebstechnischen, administrativen und sicherheitstechnischen Informationen geringer als die Übertragungsgeschwindigkeit des virtuellen Betriebstechnik-Übertragungscontainers - Anspruch 7. Aufgrund der geringeren Übertragungsgeschwindigkeit der zu übermittelnden betriebstechnischen, administrativen und sicherheitstechnischen Informationen können diese durch einfaches Abtasten sowohl in den Betriebstechnik-Übertragungskanal eingefügt als auch die im Betriebstechnik-Übertragungskanal empfangenen betriebstechnischen, administrativen und sicherheitstechnischen Informationen entnommen werden. Auf spezielle Synchronsierverfahren mit Hilfe von Synchronisierwörtern oder Synchronsiermustern kann hierbei verzichtet werden.

Weitere vorteilhafte Ausgestaltungen des erfindungsgemäßen Verfahrens sowie einer Anordnung zum Durchführen des erfindungsgemäßen Verfahrens sowohl in den peripheren Zubringernetz-Einrichtungen als auch in der zentralen Zubringernetz-Einrichtung sind den weiteren Ansprüchen zu entnehmen.

Im folgenden wird das erfindungsgemäße Verfahren bzw. die erfindungsgemäße Anordnung anhand zweier Blockschaltbilder näher erläutert. Dabei zeigen
- Fig 1: ein Zubringernetz mit einem SDH-Ringnetz nach dem erfindungsgemäßen Verfahren und
- Fig 2: die Struktur einer Überwachungseinheit.

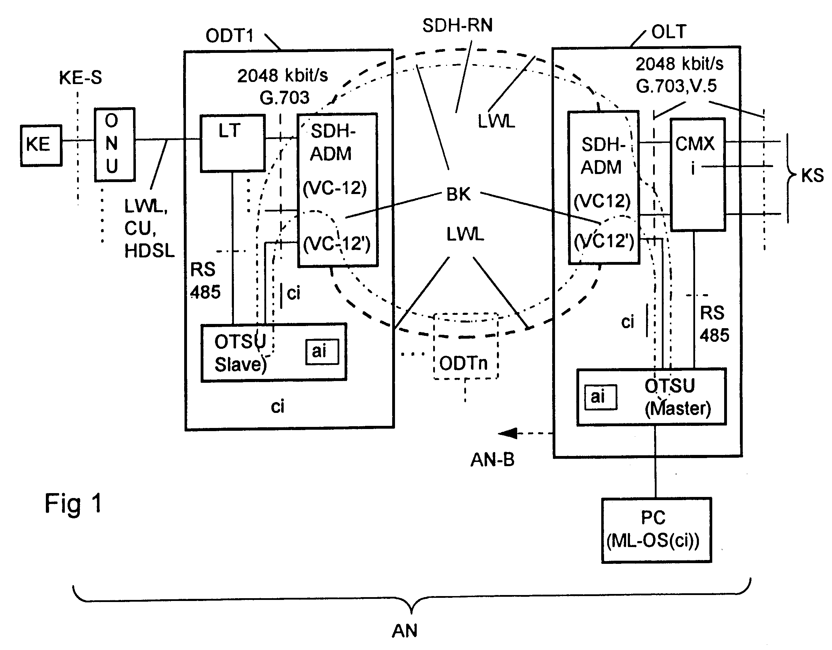

Figur 1 zeigt in einem Blockschaltbild eine zentrale Zubringernetz-Einrichtung OLT, die sowohl an ein SDH-Ringnetz (SDH-RN) als auch an ein Kommunikationssystem KS angeschlossen ist. Eine zentrale Zubringernetz-Einrichtung OLT kann mit weiteren baumartig strukturierten Zubringernetzen für den Anschluß von Kommunikationsendgeräten ausgestaltet sein - in Figur 1 durch einen strichlierten Pfeil mit der Bezeichnung AN-B angedeutet.

An das SDH-Ringnetz SDH-RN sind periphere Zubringernetz-Einrichtungen ODT1..n angeschlossen, wobei in Figur 1 beispielhaft die erste periphere Zubringernetz-Einrichtung ODT1 dargestellt ist - die weiteren peripheren Zubringernetz-Einrichtungen sind durch ein mit ODTn bezeichnetes, strichliertes Rechteck angedeutet. Sowohl in den peripheren Zubringernetz-Einrichtungen ODT1..n als auch in der zentralen Zubringernetz-Einrichtung OLT ist jeweils ein ADD-Drop-Multiplexer SDH-ADM für den Anschluß an das SDH-Ringnetz SDH-RN vorgesehen. Vorzugsweise sind die ADD-Drop-Multiplexer SDH-ADM durch Punkt-zu-Punkt-Verbindungen bzw. Lichtwellenleiter LWL, ein SDH-Ringnetz SDH-RN bildend, untereinander verbunden.

Beim Ausführungsbeispiel sei angenommen, daß das SDH-Ringnetz SDH-RN gemäß den ETSI-Standards G.707 bis G.709 realisiert ist, wobei für den Transport von Informationen ein standardisiertes Basistransportmodul STM-1 (Synchrones Transport Modul) bzw. ein STM-1-Rahmen mit einer Übertragungsgeschwindigkeit von 155 Mbit/s vorgesehen ist. Ein STM-1-Rahmen besteht aus einer Matrix mit neun Reihen und jede Reihe enthält 270 byts, wobei der STM-1-Rahmen eine Wiederholfrequenz von 125 µs aufweist. Mit Hilfe derartig strukturierter STM-1-Rahmen können mehrere synchrone 2,048 Mbit/s bzw. 34 Mbit/s Bitströme oder eine kontinuierliche Folge von ATM-Zellen transportiert werden. Die kleinsten Einheiten in einem STM-1-Rahmen werden als Übertragungscontainer bezeichnet, die eine standardisierte Nutzübertragungsgeschwindigkeit von 2,048 Mbit/s aufweisen. Jeder Übertragungscontainer enthält ein Kopffeld, das Angaben über die Struktur der transportierten Informationen und einige Steuer- bzw. Überwachungsinformationen enthält, wobei das Kopffeld zusammen mit dem Übertragungscontainer einen virtuellen Übertragungscontainer VC bilden. Dieser kleinste virtuelle Übertragungscontainer wird standardgemäß mit VC-12 bezeichnet. Erfindungsgemäß wird jeweils zwischen den ADD-Drop-Multiplexern SDH-ADM zumindest ein virtueller Übertragungscontainer VC-12 als virtueller Betriebstechnik-Übertragungscontainer VC12' eingerichtet bzw. definiert - im Ausführungsbeispiel ist jeweils ein Betriebstechnik-Übertragungscontainer VC-12' eingerichtet. Diese Betriebstechnik-Übertragungscontainer VC-12' sind in jeder der an das SDH-Ringnetz SDH-RN angeschlossenen zentralen oder peripheren Zubringernetz-Übertragungseinrichtungen OLT, ODT1..N administrativ bekannt, d.h. eingerichtet und werden von diesen ausschließlich für die Übermittlung von betriebs- und sicherheitstechnischen sowie administrativen Informationen ci - im weiteren mit Betriebsinformationen ci bezeichnet - benutzt.

Mit Hilfe der administrativen Betriebsinformationen ci werden beispielsweise von der zentralen Zubringernetz-Einrichtung OLT die peripheren Zubringernetz-Einrichtungen ODT1..N konfiguriert, d.h. in den entsprechenden Betriebsmodus gesteuert und die jeweiligen schaltungs- und programmtechnischen Einstellungen vorgenommen. Die sicherheitstechnischen Betriebsinformationen ci stellen beispielsweise Fehlermeldungen dar, die von den peripheren an die zentrale Zubringernetz-Einrichtung ODT1..N, OLT übermittelt werden. Betriebstechnische Betriebsinformationen ci sind beispielsweise Informationen zu betriebstechnischen Einstellungen von durch Programme realisierten Protokollen oder Funktionsabläufen.

Für das Einfügen und Entnehmen der Betriebsinformationen ci in den sowie aus dem STM-1-Rahmen ist in jeder der an das SDH-Ringnetz SDH-RN angeschlossenen Einrichtungen OLT,ODT1..N jeweils eine Überwachungseinheit OTSU vorgesehen. In den ADD-Drop-Multiplexern SDH-ADM sind die sowohl übermittlungsrichtungs-gemäß ankommenden als auch abgehenden Übertragungscontainer VC-12, d.h. auch der Betriebstechnik-Übertragungscontainer VC-12', durch eine standardisierte G.703-Schnittstelle mit einer Übertragungsgeschwindigkeit von 2048 kbit/s repräsentiert.

Über gleichartig ausgestaltete G.703-Schnittstellen sind in den peripheren Zubringernetz-Einrichtungen ODT1..n Anschlußeinheiten LT angeschlossen, die über Übertragungsmedium wie beispielsweise Kupferleitung, Lichtwellenleiter oder mit Hilfe eines HDSL-Übertragungs-Verfahrens mit weiteren Zubringernetz-Einheiten ONU verbunden sind - in Figur 1 ist beispielhaft eine weitere Zubringernetz-Einrichtung ONU dargestellt. An diese weiteren Zubringernetz-Einrichtungen ONU sind über entsprechende Kommunikationsendgeräte-Schnittstellen KE-SS Kommunikationsendgeräte KE - beispielsweise Video-Kommunikationsendgeräte - angeschlossen.

In der zentralen Zubringernetz-Einrichtung OLT ist der ADD-Drop-Multiplexer SDH-ADM über mehrere standardisierte G.703-Schnittstellen mit einem Multiplexer CMX verbunden, mit dessen Hilfe die in dieser Einrichtung OLT gebildeten Informationen, beispielsweise Betriebsinformationen ci in die jeweiligen, vom ADD-Drop-Multiplexer SDH-ADM übermittelten Informationen i eingefügt und an das angeschlossene Kommunikationssystem über gleichartig realisierte G.703-Schnittstellen mit einer Übertragungsgeschwindigkeit von 2048 kbit/s übermittelt werden und umgekehrt. Die Informations-Struktur innerhalb eines Übertragungscontainers sowie die vermittlungstechnischen Signalisierungsprozduren sind hierbei vorteilhaft gemäß dem ESTI-Standard V.5 ausgestaltet, wobei gemäß dem ETSI-Standard V.5.1 und gemäß dem ETSI-Standard V.5.2 ein zentraler Signalisierungskanal mit paketorientierter Signalisierungsinformations-Übermittlung vorgesehen ist.

Die Überwachungseinheit OTSU in der zentralen Zubringernetz-Einrichtung OLT wird als Master - in Figur 1 durch in Klammern gesetzte Bezeichnung (Master) angedeutet - und die Überwachungseinheit OTSU in den peripheren Zubringernetz-Einrichtungen ODT1..n wird als Slave-Überwachungseinheit - in Figur 1 durch eine in Klammern gesetzte Bezeichnung 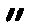 Slave" angedeutet - betrieben. An die als Master eingestellte Überwachungseinheit OTSU ist eine Steuereinrichtung, z.B. ein Personalcomputer PC angeschlossen, indem für die betriebstechnische sowie sicherheitstechnische sowie administrative Einstellung und Überwachung des in Figur 1 dargestellten Zubringernetzes AN ein Betriebssystem ML-OS implementiert ist. Mit Hilfe dieses Betriebssystems können die jeweiligen Betriebsinformationen ci gebildet und über die Überwachungseinheit OTSU und den ADD-Drop-Multiplexer SDH-ADM und das SDH-Ringnetz SDH-RN an die jeweiligen peripheren Zubringernetz-Einrichtungen ODT1..n oder über diese an die weiteren Zubringernetz-Einrichtungen ONU übermittelt werden und die jeweiligen Einstellungen vorgenommen werden. Analog hierzu werden von den peripheren oder weiteren peripheren Zubringernetz-Einrichtungen ODT1..n, ONU übermittelte betriebs- und sicherheitstechnischen Informationen ci - beispielsweise Fehlermeldungen - bewertet und entsprechende Reaktionen eingeleitet.

Für das Weiter-Übermitteln oder Empfangen der Betriebsinformationen ci sind die Überwachungseinheiten OTSU über Datenschnittstellen RS 485 gemäß dem Standard RS 485 mit den Anschlußeinheiten LT bzw. dem Multiplexer CMX verbunden. Über diese Datenschnittstellen RS 485 werden die jeweiligen Betriebsinformationen ci an die betroffenen Einrichtungen LT,CMX übermittelt und von diesen bearbeitet oder an an diese Einrichtungen LT,CMX angeschlossenen Einrichtungen ONU,KS weitergeleitet. Beim Ausführungsbeispiel werden insbesondere Betriebsinformationen ci an die weiteren peripheren Zubringernetz-Einrichtungen ONU im Sinne eines Fernbetreibens und Fernadministrierens weitergeleitet oder von diesen Betriebsinformationen ci empfangen - beispielsweise Fehlermeldungen oder Bestätigungen für Administrationsvorgänge oder betriebstechnischen Einstellungen. Hierbei werden je nach Betriesart - Master- oder Slavebetrieb - unterschiedliche Datenschnittstelle und G.703- Schnittstellen G.703 benutzt.

Für die gezielte Übermittlung von Betriebsinformationen ci sind in jeder der an das SDH-Ringnetz SDH-RN angeschlossenen Einrichtungen OLT, ODT1..n Adressierungsinformationen ai gespeichert, mit deren Hilfe die in den Betriebstechnik-Übertragungscontainern VC-12' übermittelten Betriebsinformationen ci gezielt an die jeweilige Einrichtung OLT, ODT1..n übermittelt werden können. Hierbei werden die Betriebsinformationen ci im SDH-Ringnetz SDH-RN von ADD-Drop-Multiplexer SDH-ADM zu ADD-Drop-Multiplexer SDH-ADM über die eingerichteten Betriebstechnik-Übertragungscontainer VC-12 übermittelt und über die G.703-Schnittstellen G.703 an die jeweilige Überwachungseinheit OTSU weitergeleitet. In den Überwachungseinheiten OTSU sind die übermittlungsrichtungsgemäß ankommenden und abgehenden, virtuellen Betriebstechnik-Übertragungscontainer VC-12' abgeschlossen - physikalisch und prozedural -, d.h. die übermittelten Betriebsinformationen ci werden entnommen und anhand der in den Betriebsinformationen ci eingefügten Adreßinformationen ai wird überprüft, ob diese für sie bestimmt oder weiterzuleiten sind. Das Einfügen oder Hinzufügen der Adreßinformation ai kann vorteilhaft durch die Überwachungseinheiten OTSU erfolgen. Sind die Betriebsinformationen ci für sie bestimmt, werden sie über die Überwachungseinheit OTSU an die betroffenen Komponenten der jeweiligen Zubringernetz-Einrichtungen OLT,ODT1..n weitergeleitet. Andernfalls werden die entnommenen Betriebsinformationen ci erneut in den abgehenden Betriebstechnik-Übertragungscontainer VC12' eingeblendet und an den nächsten ADD-Drop-Multiplexer SDH-ATM weitergeleitet.

Der erfindungsgemäße zentrale, virtuelle Betriebstechnik-Übertragungskanal BK umfaßt alle zwischen den ADD-Drop-Multiplexern SDH-ADM eingerichteten virtuellen Betriebstechnik-Übertragungscontainer VC-12' einschließlich deren in den Überwachungseinrichtungen OTSU realisierten Abschlüsse sowie die prozedurale Behandlung der übermittelten und zu übermittelnden Betriebsinformationen ci in den Überwachungseinheiten OTSU, d.h. gezieltes Weiterleiten in Abhängigkeit von der im Betriebstechnik-Übertragungskanal BK übermittelten Adreßinformationen ai - in Figur 1 durch strichpunktierte Linien mit der Bezeichnung BK angedeutet.

Die Betriebsinformationen ci werden in den jeweiligen Einrichtungen OLT, ODT1..n, ONU mit einer Übertragungsgeschwindigkeit von beispielsweise 64 oder 128 kbit/s übermittelt bzw. verarbeitet. Bei einer Übermittlung über den Betriebstechnik-Übertragungskanal BK werden die zu übermittelnden Betriebsinformationen ci mit der Übermittlungsgeschwindigkeit des Betriebstechnik-Übertragungskanals BK von 2048 kbit/s abgetastet und über diesen übermittelt. Analog hierzu werden die empfangenen Betriebsinformationen ci mit der internen Übertragungsgeschwindigkeit von 64 bzw. 128 kbit/s abgetastet. Durch diese einfache Abtastung sowohl beim Senden als auch beim Empfangen können aufwendige Synchronisierungsmechanismen entfallen. Dies ist jedoch nur möglich, da die Übertragungsgeschwindigkeiten erheblich unterschiedlich sind.

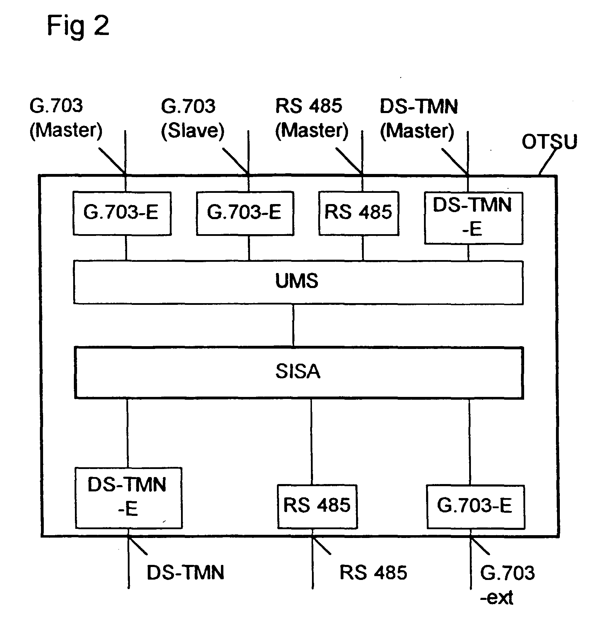

Figur 2 zeigt in einem Blockschaltbild die Struktur einer Überwachungseinheit OTSU. Für den Anschluß an den Betriebstechnik-Übertragungscontainer (VC-12') sind zwei G.703-Schnittstellen G.703 vorgesehen, wobei eine als Master- und eine als Slave-Schnittstelle - in Figur 2 durch die Bezeichnung (Master),(Slave) angedeutet - ausgestaltet ist und je nach Einsatz wird die entsprechende G.703-Schnittstelle G.703 verwendet. Die G.703-Schnittstelle G.703 im Master-Betrieb erlaubt deren Um- bzw. Durchschaltung zum Betriebssystem ML-OS bzw. einem Servivc-Personalcomputer - nicht dargestellt. Für das Weiterleiten von Betriebsinformationen ci an die internen Komponenten der an das SDH-Ringnetz SDH-RN angeschlossenen peripheren und zentralen Zubringernetz-Einrichtungen OLT, ODT1..n ist eine weitere G.703-Schnittstelle G.703-ext sowie eine Datenschnittstelle RS 485-ext gemäß dem Standard RS 485 vorgesehen, wobei je nach in den internen Komponenten LT,CMX realisierten Schnittstellen die geeignete Schnittstelle RS 485-ext,G.703-ext angeschlossen wird. Für die Übermittlung von Betriebsinformationen ci an Übertragungs- und Multiplexeinrichtungen in den jeweiligen Zubringernetzeinrichtungen OLT,ODT1..n,ONU sowie für die Informationsübermittlung für ein separates Networkmanagement sind eine interne Managementschnittstelle DS-TMN und eine standardisierte RS 485-Schnittstelle RS 485 vorgesehen. Desweiteren ist eine zentrale Managementschnittstelle DS-TMN(Master) sowie eine weitere zentrale standardisierte RS 485-Datenschnittstelle RS 485 (Master) vorgesehen, die jeweils für die Informationsübermittlung von und zu zentralen Komponenten der jeweiligen Zubringernetz-Einrichtungen benutzt wird.

Jede der vorgehend beschriebenen Schnittstellen G.703, G.703-ext, DS-TMN, RS 485 ist durch eine die physikalischen Eigenschaften realisierende Einheit G.703-E, RS 485-E, DS-TMN-E, DS-opt-E realisiert, die wiederum mit einer zentralen Komponente bzw. einer Steuereinheit SISA verbunden sind, mit deren Hilfe die von den jeweiligen Einrichtungen OLT,ODT1..n,ONU, LT,CMX übermittelten Betriebsinformationen ci gesammelt und für eine Übermittlung über den Betriebstechnik-Übertragungscontainer (VC-12') aufbereitet werden. Da die gebildeten Betriebsinformation ci eine Übertragungsgeschwindigkeit von 64 oder 128 kbit/s und die Übertragungsgeschwindigkeit des Betriebstechnik-Übertragungscontainers VC-12' 2048 kbit/s beträgt, werden die zu übermittelnden Betriebsinformationen ci durch Überabtastung in den Betriebstechnik-Übertragungscontainer VC-12' eingefügt bzw. durch Abtastung des 2048 kbit/s-Informationsstroms mit der Übertragungsgeschwindigkeit von 64 oder 128 kbit/s entnommen. Durch eine Umschalteinheit UMS werden die G.703-Schnittstellen G.703(Master),G.703(Slave) sowie die Datenschnittstellen RS 485(Master), DS-TMN in Abhängigkeit von der eingestellten Betriebsart Master oder Slave an die Steuereinheit SISA geschaltet.

## Patentansprüche

1. Verfahren zum Betreiben von an ein Ringnetz (RN) angeschlossenen, peripheren Zubringernetz-Einrichtungen (ODT1..n) durch eine mit dem Ringnetz (RN) verbundene zentrale Zubringernetz-Einrichtung (OLT) in einem Zubringernetz (AN) eines Kommunikationsneztes (KN), wobei über mehrere virtuelle Übertragungskanäle (VC-12) des Ringnetzes (RN) Nutz- und Signalisierungsinformationen (ni,si) zu und von peripheren Zubringernetz-Einrichtungen (ODT1..n) an die und von der zentralen Zubringernetz-Einrichtung (OLT) übertragen werden,
- bei dem im Ringnetz (RN) ein zentraler, virtueller Betriebstechnik-Übertragungskanal (BK) eingerichtet wird,
- bei dem betriebstechnische, administrative und sicherheitstechnische Informationen (ci) von der zentralen Zubringernetz-Einrichtung (OLT) bzw. von den peripheren Zubringernetz-Einrichtungen (ODT1..n) über den eingerichteten, virtuellen Betriebstechnik-Übertragungskanal (BK) gezielt an die jeweiligen peripheren Zubringernetz-Einrichtungen (ODT1..n) bzw. an die zentrale Zubringernetz-Einrichtung (OLT) übermittelt werden.

2. Verfahren nach Anspruch 1,
**dadurch gekennzeichnet,**
daß an die peripheren Zubringernetz-Einrichtungen (ODT1..n) für den Anschluß von Kommunikationsendgeräten (KE) vorgesehene weitere Zubringernetz-Einrichtungen (ONU) anschließbar sind, und daß betriebstechnische, administrative und sicherheitstechnische Informationen (ci) für die bzw. von den jeweiligen weiteren Zubringernetz-Einrichtungen (ONU) über den zentralen, virtuellen Betriebstechnik-Übertragungskanal (BK) des Ringneztes (RN) von der bzw. an die zentrale Zubringernetz-Einrichtung (OLT) übermittelt werden.

3. Verfahren nach Anspruch 1 oder 2,
**dadurch gekennzeichnet,**
daß in den peripheren Zubringernetz-Einrichtungen (ODT1..n)
- die über den virtuellen Betriebstechnik-Übertragungskanal (BK) empfangenen betriebstechnischen, administrativen und sicherheitstechnischen Informationen (ci), die innerhalb des Betriebstechnik-Übertragungskanals (BK) an die jeweilige periphere Zubringernetz-Einrichtung (ODT1..n) adressiert sind, entnommen und entweder an deren interne Komponenten oder an die betroffene angeschlossene weitere Zubringernetz-Einrichtung (ONU) übermittelt werden und
- von den angeschlossenen weiteren Zubringernetz-Einrichtungen (ONU) übermittelte oder intern gebildete oder weiterzuleitende betriebstechnische, administrative und sicherheitstechnische Informationen (ci) im Sinne einer Übermittlung an die zentrale Zubringernetz-Einrichtung (OLT) ringsnetz-konform in den virtuellen Betriebstechnik-Übertragungskanal (BK) des Ringnetzes (RN) eingefügt werden.

4. Verfahren nach einem der Ansprüche 1 oder 2,
**dadurch gekennzeichnet,**
- daß das Ringnetz (RN) als SDH-Ringnetz (SDH-RN) und in diesem ein virtueller Betriebstechnik-Übertragungskanal (BK) durch jeweils zumindest einen virtuellen Betriebstechnik-Übertragungscontainer (VC-12') zwischen den angeschlossenen peripheren und der zentralen Zubringernetz-Einrichtung (OLT, ODT1..n) realisiert ist, wobei in den peripheren Zubringernetz-Einrichtungen (ODT1..n) und der zentralen Zubringernetz-Einrichtung (OLT) jeweils der zumindest eine ankommende und abgehende Betriebstechnik-Übertragungscontainer (VC-12') abgeschlossen ist,
- daß die ankommenden betriebstechnischen, administrativen und sicherheitstechnischen Informationen (ci) aus dem zumindest einen, abgeschlossenen Betriebstechnik-Übertragungscontainer (VC-12') entnommen werden,
- daß die entnommenen betriebstechnischen, administrativen und sicherheitstechnischen Informationen (ci), die an die jeweilige periphere Zubringernetz-Einrichtung (ODT1..n) bzw. zentrale Zubringernetz-Einrichtung (OLT,) adressiert ist, an diese weitergeleitet werden, und
- daß die entnommenen sowie in der jeweiligen peripheren Zubringernetz-Einrichtung (ODT1..n) bzw. der zentralen Zubringernetz-Einrichtung (OLT) gebildeten sowie von einer weiteren peripheren Zubringernetz-Einrichtung (ONU) übermittelten betriebstechnischen, administrativen und sicherheitstechnischen Informationen (ci), die an eine andere periphere Zubringernetz-Einrichtung bzw. an die zentrale Zubringernetz-Einrichtung (OLT, ODT1..n) adressiert sind, in den abgehenden Betriebstechnik-Übertragungscontainer (VC-12') eingefügt werden.

5. Verfahren nach Anspruch 4,
**dadurch gekennzeichnet,**
daß der zumindest eine virtuelle Betriebstechnik-Übertragungscontainer (VC-12') in den an das SDH-Ringnetz (RN) angeschlossenen Komponenten (OLT,ODT1..n) gemäß dem ETSI-Standard G.703 abgeschlossen ist.

6. Verfahren nach einem der Ansprüche 1 bis 5,
**dadurch gekennzeichnet,**
daß den betriebstechnischen, administrativen oder sicherheitstechnischen Informationen (ci) im Sinne einer gezielten Übermittlung an eine periphere oder zentrale Zubringernetz-Einrichtung (OLT,ODT1..n) jeweils Adreßinformationen (ai) hinzugefügt und über den Betriebstechnik-Übertragungskanal (BK) übermittelt werden, und daß in den betriebstechnischen, administrativen oder sicherheitstechnischen Informationen (ci) empfangende Zubringernetz-Einrichtungen (OLT,ODT1..n) in Abhängigkeit von der mitübermittelten Adreßinformation (ai) die übermittelten betriebstechnischen, administrativen oder sicherheitstechnischen Informationen (ci) an interne oder an diese angeschlossene Komponenten (LT,CMX) oder an die im Ringnetz (RN) folgende Zubringernetz-Einrichtung (OLT, ODT1..n) weitergeleitet wird.

7. Verfahren nach einem der vorhergenden Ansprüche,
**dadurch gekennzeichnet,**
daß die zu übermittelnden betriebstechnischen, administrativen und sicherheitstechnischen Informationen (ci) eine gegenüber der Übertragungsgeschwindigkeit des virtuellen Betriebstechnik-Übertragungskanals (BK) geringere Übertragungsgeschwindigkeit aufweisen.

8. Anordnung zum Betreiben von an ein Ringnetz (RN) angeschlossenen peripheren Zubringernetz-Einrichtungen (ODT1..n) durch eine mit dem Ringnetz (RN) verbundene zentrale Zubringernetz-Einrichtung (OLT) in einem Zubringernetz (AN) eines Kommunikationsneztes (KN), wobei über mehrere Übertragungscontainer (VC-12) des Ringnetzes (RN) Nutz- und Signalisierungsinformationen (ni,si) zu und von peripheren Zubringernetz-Einrichtungen (ODT1..n) an die verbundene zentrale Zubringernetz-Einrichtung (OLT) übertragen werden,
- mit jeweils einer Überwachungseinheit (OTSU) zur Realisierung eines virtuellen Betriebstechnik-Übertragungskanals (BK) im Ringnetz (RN) in den peripheren Zubringernetz-Einrichtungen (ODT1..n) und der zentralen Zubringernetz-Einrichtung (OLT),
- mit in der Überwachungseinheit (OTSU) vorgesehenen Mitteln zum ringnetz-gemäßen Einfügen von betriebstechnischen, administrativen und sicherheitstechnischen Informationen (ci) in den virtuellen Betriebstechnik-Übertragungskanal (BK), wobei im Sinne einer gezielten Übermittlung der betriebstechnischen, administrativen und sicherheitstechnischen Informationen (ci) an periphere Zubringernetz-Einrichtung (ODT1..n) oder eine zentrale Zubringernetz-Einrichtung (OLT) eine Adressierung innerhalb des Betriebstechnik-Übertragungskanals (BK) erfolgt und
- mit in der Überwachungseinheit (OTSU) vorgesehenen Mitteln zur ringnetz-gemäßen Entnahme von betriebstechnischen, administrativen und sicherheitstechnischen Informationen (ci) aus dem virtuellen Betriebstechnik-Übertragungskanal (BK), wobei die Entnahme in Abhängigkeit von der Adressierung innerhal des Betriebstechnik-Übertragungskanals (BK) erfolgt.

9. Anordnung nach Anspruch 8,
**dadurch gekennzeichnet,**
daß die Überwachungseinheit (OTSU) für einen Anschluß an ein SDH-Ringnetz (SDH-RN) ausgestaltet ist, und daß Mittel zum Einfügen und Entnehmen der betriebstechnischen, administrativen und sicherheitstechnischen Informationen (ci) in zumindest einen abgehendenden sowie zumindest einen ankommenden, jeweils abgeschlossenen virtuellen Betriebstechnik-Übertragungscontainer (VC-12') vorgesehen sind.

10. Anordnung nach Anspruch 8 oder 9,
**dadurch gekennzeichnet,**
daß in der Überwachungseinheit (OTSU) Mittel
- zum Einfügen von zu übermittelnden betriebstechnischen, administrativen und sicherheitstechnischen Informationen (ci) mit einer ersten Übertragungsgeschwindigkeit (BR1) in den abgeschlossenen, zumindest einen abgehenden, virtuellen Betriebstechnik-Übertragungscontainer (VC-12') mit einer gegegenüber der ersten höheren Übertragungsgeschwindigkeit (BR2), und
- zum Abtasten der aus dem zumindest einen ankommenden, abgeschlossenen virtuellen Betriebstechnik-Übertragungscontainer (VC-12') entnommenen betriebstechnischen, administrativen und sicherheitstechnischen Informationen (ci) mit der zweiten Übertragungsgeschwindigkeit (BR2) im Sinne des Bildens von betriebstechnischen, administrativen und sicherheitstechnischen Informationen (ci) mit der ersten Übertragungsgeschwindigkeit (BR1) vorgesehen sind.

11. Anordnung nach einem der Ansprüche 8 bis 10,
**dadurch gekennzeichnet,**
daß in der Überwachungseinheit (OTSU) zum Abschluß des zumindest einen abgehenden und ankommenden virtuellen Betriebstechnik-Übertragungscontainers (VC-12') jeweils zumindest eine gemäß dem ETSI-Standard G.703 realisierte Übertragungsschnittstelle (TI) vorgesehen ist.
